# EUROPEAN PATENT APPLICATION

(11) **EP 1 923 878 A1**
(43) Date of publication of application: **21.05.2008**
(21) Application number: 07022125.4
(22) Date of filing: 14.11.2007
(51) Int. Cl.: G11B 7/135

(54) **Optical pickup device**

(30) Priority: 16.11.2006 JP 2006310748
(71) Applicant: Funai Electric Co., Ltd., Daito-shi, Osaka 574-0013 (JP)
(72) Inventor: Hamaoka, Mika, Daito-shi Osaka 574-0013 (JP); Nishioka, Ken, Daito-shi Osaka 574-0013 (JP); Sasabe, Mitsuyoshi, Daito-shi Osaka 574-0013 (JP)
(74) Representative: Grünecker, Kinkeldey, Stockmair & Schwanhäusser Anwaltssozietät

(57) **Abstract**

An optical pickup device for reducing comma aberration, spherical aberration, and astigmatism while entering a beam light having an ideal intensity distribution to the objective lens is provided.In an optical pickup device for emitting beam lights having different wavelengths from light sources, transmitting the beam lights through a common collimator lens and an objective lens and irradiating the beam lights onto an optical disc, one of the beam lights is converted to an infinite light and exit from the collimator lens, and the other beam light is converted to a finite light and exit from the collimator. A beam shaping element, including a light transmissive prism formed to a wedge shape, for entering the beam light exit from the collimator lens from a first surface, reflecting the beam light from the opposing second surface, and exiting the beam light from the first surface towards the objective lens and converting the horizontal to vertical ratio of the beam light is arranged between the collimator lens and the objective lens. A diffraction grating having a pattern for correcting the wavelength dispersion characteristic of the beam shaping element and the astigmatism generated on the finite light by the element is arranged on the second surface of the element.

## Description

### BACKGROUND OF THE INVENTION

### 1. Field of the Invention

The present invention relates to an optical pickup device for separately emitting beam lights having different wavelengths from a plurality of light sources and transmitting the beam lights through a common collimator lens and an objective lens and irradiating the beam lights onto an optical disc.

### 2. Description of the Related Art

The optical pickup device includes that which emits beam lights having different wavelengths from a plurality of light sources and irradiates the beam lights onto an optical disc through a common collimator lens, a rising mirror, and an objective lens. Specifically, in this type of optical pickup device, for example, the beam lights such as red and blue corresponding to the type of optical disc is emitted from the light source, converted to an infinite light in which the light flux is parallel by the collimator lens, reflected by the rising mirror so as to enter the objective lens perpendicularly, collected by the objective lens, and irradiated onto the optical disc. The light reflected by the optical disc is received by a light detector via the objective lens, the rising mirror, and the collimator lens, photo-electric converted by the light detector, and focusing error signal, tracking error signal, reproduction signal of the recorded data of the optical disc and recording signal etc. are detected.

In order to obtain a satisfactory reproduction signal and the like, an ideal intensity distribution of the beam light to be entered into the objective lens is a circle. However, the intensity distribution of the beam light emitted from the light source and transmitted through the collimator lens may be an ellipse due to the properties of the light source. Furthermore, when the rising mirror is made up of parallel flat plates that reflect the light at the surface, the intensity distributions of the beam light entering the rising mirror from the collimator lens and the beam light exiting from the rising mirror towards the objective lens have the same shape. Therefore, the elliptical beam light in which the intensity distribution is shifted from the ideal distribution enters the objective lens, and thus a satisfactory reproduction signal and the like cannot be obtained. In Japanese Laid-Open Patent Publication No. 10-320811, the rising mirror is configured by a light transmissive rising prism and a light reflective diffraction grating arranged on an inclined surface of the prism on the side opposite to the light source, where usage efficiency of the beam light is changed by controlling the application voltage on the diffraction grating, but no description is made on the shape of the intensity distribution of the beam light.

The rising mirror, when being made up of light transmissive rising prism etc., has the wavelength dispersion characteristic that the angle of refraction changes by the wavelength of the beam light. Thus, even if the optical axes of the beam lights having different wavelengths coincide when the beam lights enter the rising mirror from the collimator lens, one optical axis will be tilted with respect to the other optical axis when the beam lights exit from the rising mirror towards the objective lens, whereby coma aberration is generated.

When both beam lights having different wavelengths are converted to infinite lights and entered to the common objective lens, a large spherical aberration is generated in one beam light. Furthermore, when one of the beam lights having different wavelengths is converted to finite light in which the light flux diverges, astigmatism is generated in the beam light exiting from the rising mirror towards the objective lens. In Japanese Laid-Open Patent Publication No. 2005-32299 (paragraph 0105), a diffraction grating made of polarization hologram etc. for diffracting the returned light from the optical disc is arranged, and by adjusting the shape of the diffraction grating, a function of correcting the astigmatism is added. However, no description is made on correcting other aberrations. In Japanese Laid-Open Patent Publication No. 2004-139672, a diffraction grating for diffracting the returned light from the optical disc is arranged on the light detector side of the half mirror, but no description is made on correction of aberrations.

### SUMMARY OF THE INVENTION

In view of solving the above problems, the present invention aims to provide an optical pickup device for reducing coma aberration, spherical aberration, and astigmatism while entering the beam light having an ideal intensity distribution to the objective lens.

The present invention provides an optical pickup device for separately emitting beam lights having different wavelengths from a plurality of light sources, transmitting the beam lights through a common collimator lens and an objective lens, and irradiating the beam lights onto an optical disc; wherein the beam light emitted from one light source is converted to an infinite light in which light flux is parallel by the collimator lens, and exit from the collimator lens; the beam light emitted from the other light source is converted to a finite light in which the light flux diverges, and exit from the collimator lens; the device including a beam shaping element, including a light transmissive prism formed to a wedge shape, for entering the beam light exit from the collimator lens from a first surface, reflecting the beam light at a second surface opposing the first surface, and exiting the beam light from the first surface towards the objective lens and converting a horizontal to vertical ratio of the beam light; and a light reflective diffraction grating arranged on the second surface of the beam shaping element, the diffraction grating being formed to a pattern for correcting wavelength dispersion characteristic of the beam shaping element and astigmatism generated on the finite light by the beam shaping element.

In this manner, it is possible to enter the circular beam light having an ideal intensity distribution to the objective lens by converting the horizontal to vertical ratio of the intensity distribution of the beam light to substantially one in the beam shaping element, even if the intensity distribution of the beam light emitted from the light source and transmitted through the collimator lens is an ellipse due to the properties of the light source. Furthermore, since the wavelength dispersion characteristic of the beam shaping element is corrected by the diffraction grating, the optical axes of the beam lights having different wavelengths exit from the beam shaping element towards the objective lens become parallel, thereby suppressing occurrence of coma aberration. One of the beam lights having different wavelengths is converted to an infinite light in the collimator lens and entered to the objective lens, and the other beam light is converted to finite light and entered to the objective lens, and thus spherical aberration in the latter beam light can be reduced while suppressing occurrence of spherical aberration in the former beam light. Furthermore, since the astigmatism generated on the finite light by the beam shaping element is corrected by the diffraction grating, the astigmatism of the beam light exit from the beam shaping element towards the objective lens can be reduced. Consequently, satisfactory reproduction signal and recording signal can be obtained by the reflected light from the optical disc.

A typical embodiment of the present invention provides an optical pickup device for separately emitting beam lights having different wavelengths from a plurality of light sources, transmitting the beam lights through a common collimator lens and an objective lens, and irradiating the beam lights onto an optical disc; wherein the beam light emitted from one light source is converted to an infinite light in which light flux is parallel by the collimator lens, and exit from the collimator lens; the beam light emitted from the other light source is converted to a finite light in which the light flux diverges, and exit from the collimator lens; the device including a beam shaping element, including a light transmissive rising prism formed to a wedge shape, for entering the beam light exit from the collimator lens from a first surface, reflecting the beam light at a second surface opposing the first surface, and exiting the beam light from the first surface towards the objective lens and converting a horizontal to vertical ratio of an intensity distribution of the beam light to substantially one; and a diffraction grating integrally arranged by forming a plurality of concave-convex parts on the second surface for reflecting the beam light of the beam shaping element, the diffraction grating having a pattern combining a pattern for canceling out wavelength dispersion characteristic of the beam shaping element and a pattern for reducing astigmatism generated on the finite light by the beam shaping element.

In this manner, it is possible to enter the circular beam light having an ideal intensity distribution to the objective lens by converting the horizontal to vertical ratio of the intensity distribution of the beam light to substantially one in the beam shaping element. Furthermore, the wavelength dispersion characteristic of the beam shaping element is canceled out by the diffraction grating, and the optical axes of the beam lights having different wavelengths exit from the beam shaping element towards the objective lens become parallel, thereby suppressing occurrence of coma aberration. One of the beam lights having different wavelengths is converted to an infinite light in the collimator lens and entered to the objective lens thereby suppressing spherical aberration, and the other beam light is converted to finite light and entered to the objective lens thereby reducing spherical aberration. Furthermore, since the astigmatism generated on the finite light by the beam shaping element is reduced in the diffraction grating, the astigmatism of the beam light exit from the beam shaping element towards the objective lens can be reduced. Consequently, satisfactory reproduction signal and recording signal can be obtained by the reflected light from the optical disc. Moreover, since the diffraction grating is integrally arranged on the reflecting surface of the beam shaping element, the number of components is few, the beam shaping element and the diffraction grating can be inexpensively and easily manufactured, and the cost of the optical pickup device can be suppressed low.

According to the present invention, the beam light having an ideal intensity distribution can be entered to the objective lens, and spherical aberration, comma aberration, and astigmatism can be reduced.

### BRIEF DESCRIPTION OF THE DRAWINGS

Fig. 1 is a view showing an optical system of an optical pickup device;
Fig. 2 is a view showing a beam shaping element and a diffraction grating;
Figs. 3A and 3B show a spot and an intensity distribution of incident light to the beam shaping element;
Figs. 4A and 4B show a spot and an intensity distribution of exit light from the beam shaping element;
Figs. 5A and 5B show a refracted state of the beam light in the beam shaping element; and
Figs. 6A, 6B and 6C show patterns of the diffraction grating.

### DESCRIPTION OF THE PREFERRED EMBODIMENTS

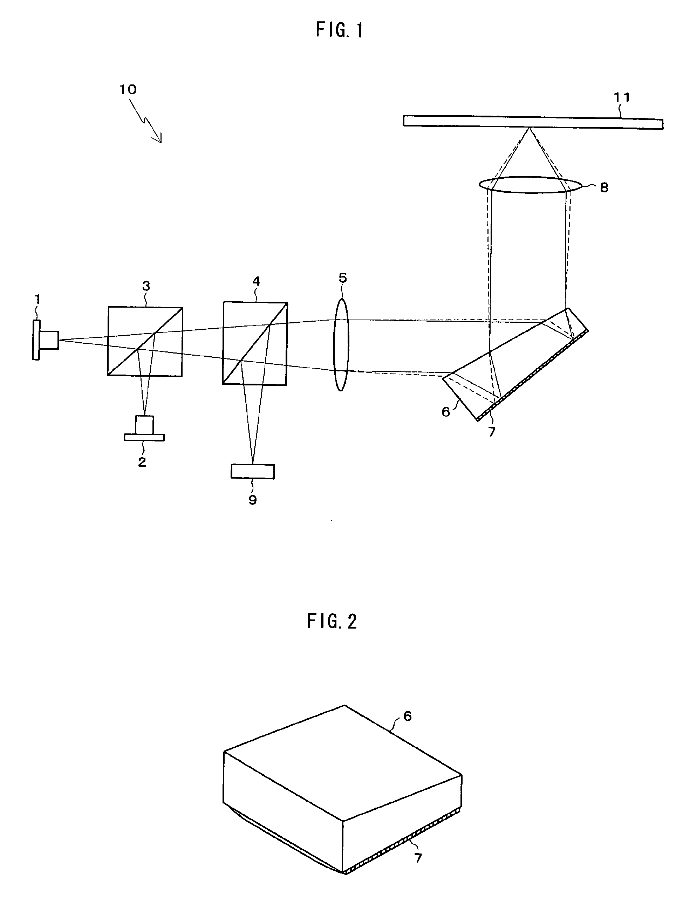

Fig. 1 is a view showing an optical system of an optical pickup device 10 according to an embodiment of the present invention. The optical pickup device 10 is embedded in a high order device such as an optical disc drive. An optical disc 11 is set on the optical disc drive and the like, and is rotated by the drive of a spindle motor etc. (not shown) in time of reproduction. The optical pickup device 10 reads and reproduces data recorded on a recording surface of the optical disc 11 or writes and records data to the recording surface of the optical disc 11.

Light sources 1, 2 include different type semiconductor laser elements. The light sources 1, 2 separately emit a beam light of red and blue having different wavelengths. Beam splitters 3, 4 transmit and reflect the beam light. A collimator lens 5 transmits the beam light and converts the beam light to an infinite light having parallel light flux. A beam shaping element 6 includes a light transmissive rising prism formed into a wedge shape as shown in Figs. 1 and 2. The beam shaping element 6 transmits and reflects the beam light. A diffraction grating 7 is a light reflective diffraction grating. The diffraction grating 7 is integrally arranged on the surface reflecting the beam lights of the beam shaping element 6 by forming a plurality of concave-convex parts on the surface. The diffraction grating 7 reflects and diffracts the beam light. An objective lens 8 focuses the focus of the beam light at one point on the recording surface of the optical disc 11. A light detector 9 receives the reflected light from the optical disc 11, and detects electrical signals. Common components 3 to 9 other than the light sources 1, 2 are used for the beam lights having different wavelengths.

The red and blue beam lights are emitted from the light sources 1, 2 according to the type of disc 11 such as a DVD or a Blu-ray disc (registered trademark). The beam light emitted from the light source 1 transmits through the beam splitters 3, 4 and enters the collimator lens 5. The beam light emitted from the light source 2 is reflected by the beam splitter 3 so that the advancing direction is bent, transmitted through the beam splitter 4, and entered into the collimator lens 5. The beam light is exit from the collimator lens 5, entered from a first surface (surface on lens 5, 8 side) of the beam shaping element 6, reflected at a second surface (reflecting surface on the side opposite to the lens 5, 8 i.e. diffraction grating 7) opposing the first surface so that the advancing direction is bent upward, and exit from the first surface towards the objective lens 8. Then the beam light is collected by the objective lens 8 and irradiated on the recording surface of the optical disc 11. The light reflected by the optical disc 11 is transmitted through the objective lens 8, reflected by the beam shaping element 6 so that the advancing direction is bent, transmitted through the collimator lens 5, reflected by the beam splitter 4 so that the advancing direction is bent, and received by the light detector 9. The light received by the light detector 9 is converted to electrical signals, and focusing error signal, tracking error signal, and reproduction signal of the recorded data of the optical disc 11 or recording signal are detected.

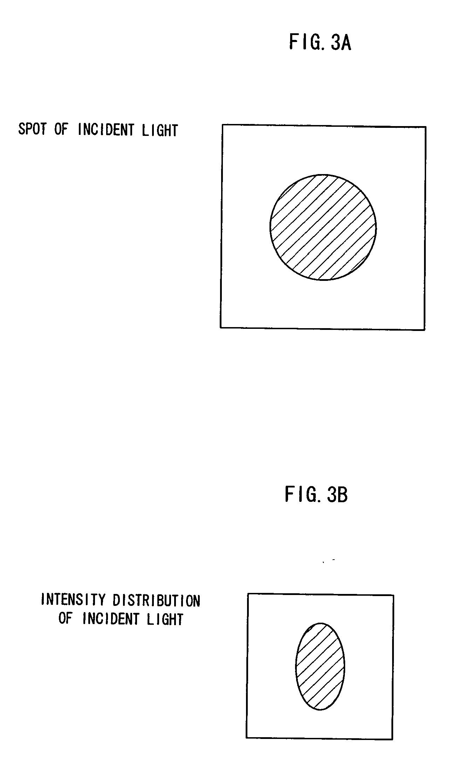

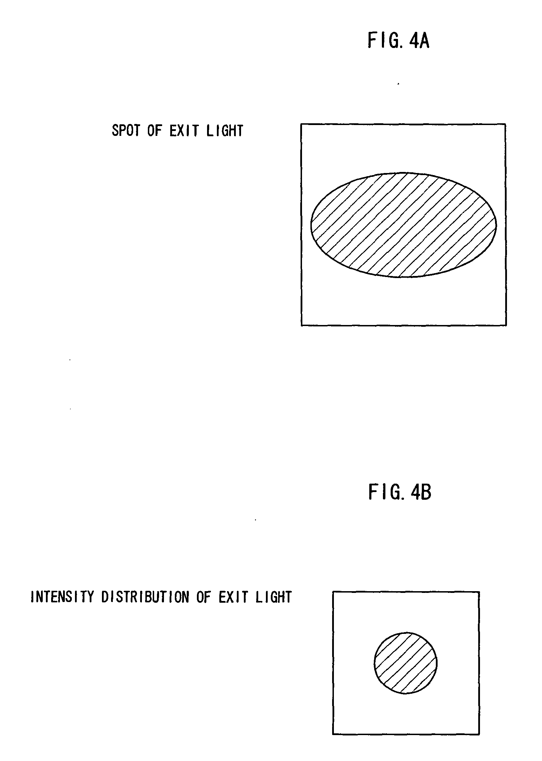

The spot of the beam light entering the beam shaping element 6 is a circle as shown in Fig. 3A due to the properties of the collimator lens 5. The intensity distribution of the beam light entering the beam shaping element 6 is an ellipse as shown in Fig. 3B due to the properties of the light sources 1, 2. The horizontal to vertical ratio of the beam light is converted in the beam shaping element 6. In particular, the horizontal to vertical ratio of the intensity distribution of the beam light is converted to substantially one. Using such properties, by adjusting the attachment angle of the beam shaping element 6, the spot of the beam light exiting from the beam shaping element 6 becomes an ellipse as shown in Fig. 4A and the intensity distribution of the beam light becomes a circle as shown in Fig. 4B. Furthermore, the beam light exit from the beam shaping element 6 enters the objective lens 8 substantially perpendicularly. The state of such beam light is ideal in obtaining a satisfactory reproduction signal and the like.

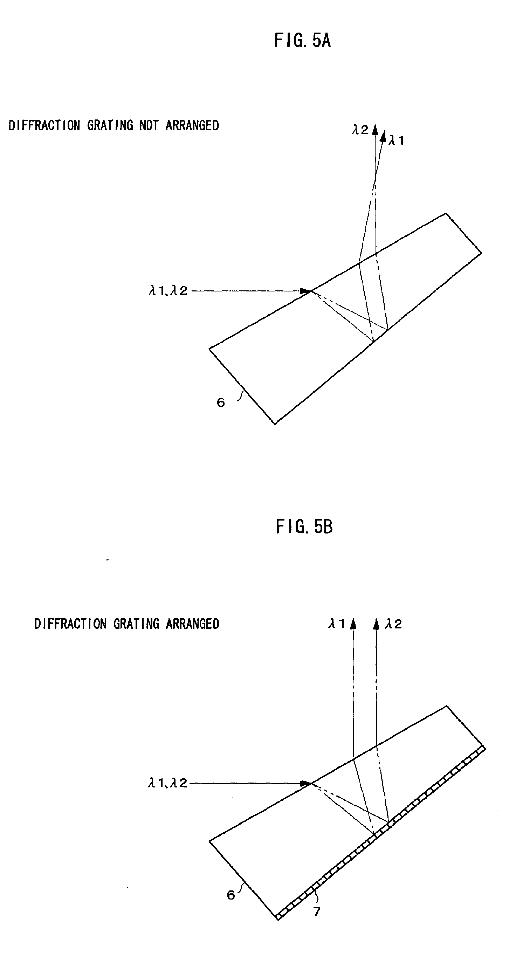

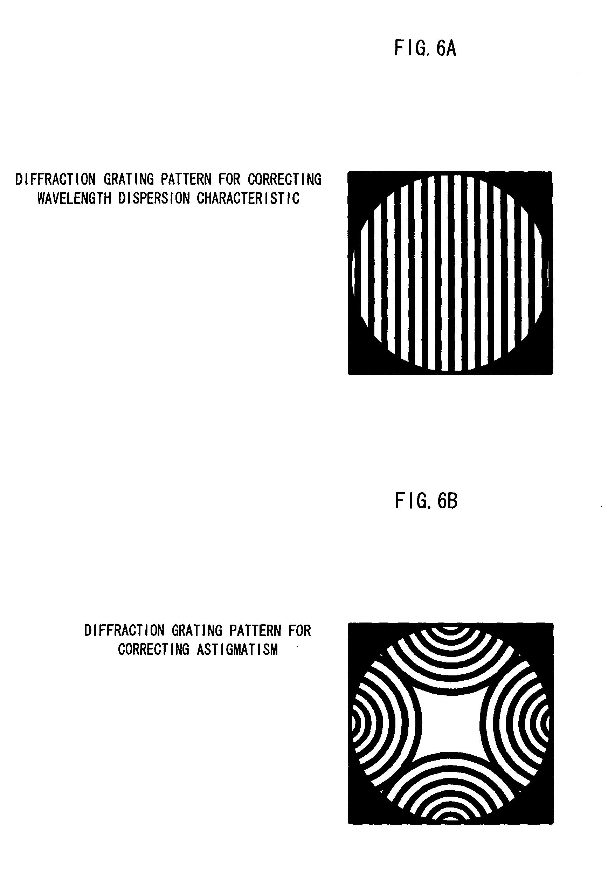

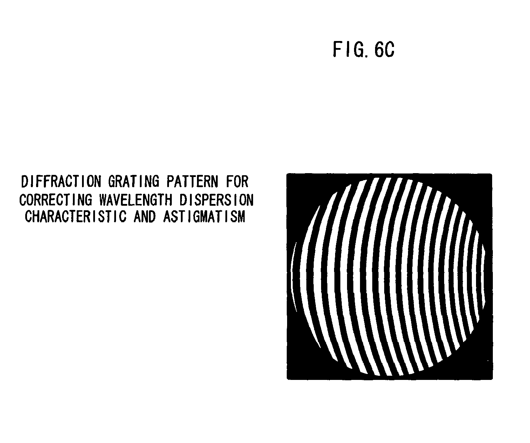

In the beam shaping element 6, the angle of refraction changes depending on the wavelength of the beam light. Due to this wavelength dispersion characteristic, when the diffraction grating 7 is not arranged on the reflecting surface of the beam shaping element 6 as shown in Fig. 5A, even if the optical axes of the beam lights having different wavelengths λ1, λ2 coincide when the beam lights enter the beam shaping element 6, the optical axis of the beam light having wavelength λ1 will be tilted with respect to the optical axis of the beam light having wavelength λ2 when the beam lights exit from the beam shaping element 6, whereby coma aberration is generated. The countermeasure therefor is performed by the diffraction grating 7. The pattern of the diffraction grating 7 suited for correcting the wavelength dispersion characteristic of the beam shaping element 6 so as to suppress the occurrence of coma aberration is a linear stripe pattern as shown in Fig. 6A. This pattern provides wavelength dispersion characteristic opposite the wavelength dispersion characteristic of the beam shaping element 6 to the diffraction grating 7, thereby canceling out the wavelength dispersion characteristic of the beam shaping element 6. The direction of the pattern is set so that the left side (or right side) of the pattern of Fig. 6A faces the direction of the collimator lens 5. In Fig. 6, the inner side of the circle is the portion of the diffraction grating 7 where the beam light is irradiated, and only the pattern of such portion is illustrated. The white portion or the black portion of the inner side of the circle is the concave part or the convex part. When the diffraction grating 7 having the pattern shown in Fig. 6A is arranged on the reflecting surface of the beam shaping element 6, the wavelength dispersion characteristics of the beam shaping element 6 and the diffraction grating 7 cancel out. Thus, the beam lights having different wavelengths λ1, λ2 enter the beam shaping element 6, reflected and diffracted by the diffraction grating 7, and exit in parallel from the beam shaping element 6, whereby coma aberration does not occur, as shown in Fig. 5B.

The objective lens 8 is designed such that the spherical aberration is zero (does not occur) when the beam light of shorter wavelength out of the beam lights having different wavelengths emitted from the light sources 1, 2 is converted to an infinite light of parallel light flux and entered thereto. Thus, when both beam lights having different wavelengths are converted to infinite light by the collimator lens 5 and entered to the objective lens 8, a large spherical aberration is generated in the beam light of long wavelength. As a countermeasure therefor, the advancing distance of the beam light from the light sources 1, 2 to the collimator lens 5 is adjusted, so that the beam light of shorter wavelength out of the beam lights having different wavelengths emitted from the light sources 1, 2 is converted to an infinite light by the collimator lens 5 and exit from the collimator lens 5 as shown with a thin solid line in Fig. 1, and the beam light of longer wavelength is converted to a finite light in which the light flux diverges and exit from the collimator lens 5 as shown with a thin broken line in Fig. 1. Thus, the beam light of shorter wavelength enters the objective lens 8 via the beam shaping element 6 and the diffraction grating 7 as infinite light, whereby spherical aberration does not occur. The beam light of longer wavelength enters the objective lens 8 via the beam shaping element 6 and the diffraction grating 7 as finite light, whereby the spherical aberration is reduced.

When the beam light enters the beam shaping element 6 as finite light, astigmatism is generated in the beam light exit from the beam shaping element 6 towards the objective lens 8. The countermeasure therefor is performed by the diffraction grating 7. The pattern of the diffraction grating 7 suited for correction to suppress astigmatism is a curved stripe pattern that curves from each side towards the center as shown in Fig. 6B. This pattern reduces the astigmatism generated on the finite light by the beam shaping element 6. When the diffraction grating 7 having a pattern shown in Fig. 6B is arranged on the reflecting surface of the beam shaping element 6, astigmatism does not occur in the beam light exiting from the beam shaping element 6 even if the beam light is entered to the beam shaping element 6 as finite light.

In order to perform both countermeasures for coma aberration and astigmatism, the diffraction grating 7 having a curved stripe pattern that curves from one side to the other side of the opposing sides as shown in Fig. 6C is arranged on the reflecting surface of the beam shaping element 6. The pattern shown in Fig. 6C is a pattern that combines the pattern for canceling out the wavelength dispersion characteristic of the beam shaping element 6 shown in Fig. 6A and the pattern for reducing the astigmatism generated on the finite light by the beam shaping element 6 shown in Fig. 6B, and corrects the wavelength dispersion characteristic and the astigmatism of the beam shaping element 6. The direction of the pattern is set so that the curvature center side (right side in Fig. 6C) of each curve of the pattern of Fig. 6C faces the direction of the collimator lens 5 or the direction opposite the collimator lens 5 according to the polarity (+ or -) of the astigmatism generated on the finite light by the beam shaping element 6. The wavelength dispersion characteristics of the beam shaping element 6 and the diffraction grating 7 are thereby canceled out, the beam lights having different wavelengths λ1, λ2 are exit in parallel from the beam shaping element 6 as shown in Fig. 5B, and coma aberration does not occur. When the beam light having long wavelength enters the beam shaping element 6 as finite light, the astigmatism that occurs in the beam light exiting from the beam shaping element 6 reduces.

According to the above-described manner, even if the intensity distribution of the beam lights emitted from the light sources 1, 2 and transmitted through the collimator lens 5 is an ellipse due to the properties of the light sources 1, 2, the horizontal to vertical ratio of the intensity distribution of the beam light is converted to substantially one in the beam shaping element 6, whereby the circular beam light having an ideal intensity distribution enters the objective lens 8. Since the wavelength dispersion characteristic of the beam shaping element 6 is corrected by the diffraction grating 7 having the pattern of Fig. 6C, the optical axes of the beam lights having different wavelengths exit from the beam shaping element 6 toward the objective lens 8 are made parallel, and occurrence of coma aberration is suppressed. The beam light of shorter wavelength out of the beam lights having different wavelengths is converted to an infinite light by the collimator lens 5 and entered to the objective lens 8, and the beam light of long wavelength is converted to finite light and entered to the objective lens 8, and thus the spherical aberration in the beam light of long wavelength can be reduced while suppressing occurrence of spherical aberration in the beam light of short wavelength. Furthermore, since the astigmatism generated on the finite light by the beam shaping element 6 is corrected by the diffraction grating 7 having the pattern of Fig. 6C, the astigmatism of the beam light exiting from the beam shaping element 6 towards the objective lens 8 can be reduced. As a result, satisfactory reproduction signal and recording signal can be obtained from the reflected light from the optical disc 11. Since the diffraction grating 7 is integrally arranged on the reflecting surface of the beam shaping element 6, the number of components is few, the beam shaping element 6 and the diffraction grating 7 can be inexpensively and easily manufactured, and the cost of the optical pickup device 10 can be suppressed low.

The present invention may employ various modes other than the above embodiment. For instance, an example of integrally arranging the diffraction grating 7 on the reflecting surface of the beam shaping element 6 has been described in the above embodiment, but the present invention is not limited thereto. The beam shaping element and the light reflective diffraction grating may be separately manufactured and the diffraction grating may be attached to the beam shaping element. The diffraction grating may be electrically or mechanically driven.

In the above embodiment, an example of applying the present invention to the optical pickup device 10 capable of reproducing and recording data with respect to the optical disc 11 has been described, but the present invention is also applicable to an optical pickup device capable of only reproducing data with respect to the optical disc.

## Claims

1. An optical pickup device for separately emitting beam lights having different wavelengths from a plurality of light sources, transmitting the beam lights through a common collimator lens and an objective lens, and irradiating the beam lights onto an optical disc; wherein
the beam light emitted from one light source is converted to an infinite light in which light flux is parallel by the collimator lens, and exit from the collimator lens; the beam light emitted from the other light source is converted to a finite light in which the light flux diverges, and exit from the collimator lens; the device comprising:
a beam shaping element, including a light transmissive prism formed to a wedge shape, for entering the beam light exit from the collimator lens from a first surface, reflecting the beam light at a second surface opposing the first surface, and exiting the beam light from the first surface towards the objective lens and converting a horizontal to vertical ratio of the beam light; and
a light reflective diffraction grating arranged on the second surface of the beam shaping element, the diffraction grating being formed to a pattern for correcting wavelength dispersion characteristic of the beam shaping element and astigmatism generated on the finite light by the beam shaping element.

2. An optical pickup device for separately emitting beam lights having different wavelengths from a plurality of light sources, transmitting the beam lights through a common collimator lens and an objective lens, and irradiating the beam lights onto an optical disc; wherein
the beam light emitted from one light source is converted to an infinite light in which light flux is parallel by the collimator lens, and exit from the collimator lens; the beam light emitted from the other light source is converted to a finite light in which the light flux diverges, and exit from the collimator lens; the device comprising:
a beam shaping element, including a light transmissive rising prism formed to a wedge shape, for entering the beam light exit from the collimator lens from a first surface, reflecting the beam light at a second surface opposing the first surface, and exiting the beam light from the first surface towards the objective lens and converting a horizontal to vertical ratio of an intensity distribution of the beam light to substantially one; and
a diffraction grating integrally arranged by forming a plurality of concave-convex parts on the second surface for reflecting the beam light of the beam shaping element, the diffraction grating having a pattern combining a pattern for canceling out wavelength dispersion characteristic of the beam shaping element and a pattern for reducing astigmatism generated on the finite light by the beam shaping element.
